# EUROPÄISCHE PATENTSCHRIFT

(11) **EP 2 047 081 B1**
(45) Veröffentlichungstag und Bekanntmachung des Hinweises auf die Patenterteilung: **16.06.2010**
(21) Anmeldenummer: 07819820.7
(22) Anmeldetag: 15.11.2007
(51) Int. Cl.: F02B 33/44

(54) **BAUGRUPPE, UMFASSEND EINEN ABGASTURBOLADER, EINEN LADELUFTKÜHLER UND EINE LADELUFTLEITUNG**
ASSEMBLY, COMPRISING AN EXHAUST GAS TURBOCHARGER, A CHARGE AIR COOLER AND A CHARGE AIR LINE
ENSEMBLE COMPRENANT UN TURBOCOMPRESSEUR À GAZ D'ÉCHAPPEMENT, UN REFROIDISSEUR D'AIR DE SURALIMENTATION ET UNE CONDUITE D'AIR DE SURALIMENTATION

(30) Priorität: 17.11.2006 DE 102006054270
(43) Veröffentlichungstag der Anmeldung: 15.04.2009
(73) Patentinhaber: ElringKlinger AG, 72581 Dettingen (DE); VERITAS AG, 63571 Gelnhausen (DE)
(72) Erfinder: BOCK, Stefan, 63762 Grossostheim (DE); SCHRAY, Roland, 74379 Ingersheim (DE); RÖSCH, Thomas, 63589 Linsengericht-Grossenhausen (DE); SEYLER, Andreas, 63584 Gründau (DE)
(74) Vertreter: Hörner, Andreas
(86) Internationale Anmeldenummer: PCT/EP2007/009870
(87) Internationale Veröffentlichungsnummer: WO 2008/058733

(56) Entgegenhaltungen:
- EP-A- 1 396 670
- WO-A-99/56049
- US-A1- 2006 182 914
- DATABASE WPI Week 200561 Derwent Publications Ltd., London, GB; AN 2005-593545 XP002469258 & JP 2005 214375 A (NISSAN DIESEL KOGYO KK) 11. August 2005 (2005-08-11)

## Beschreibung

Die vorliegende Erfindung betrifft eine Baugruppe, die einen Abgasturbolader und einen Ladeluftkühler für einen Verbrennungsmotor und eine den Abgasturbolader mit einem Ladelufteinlass des Ladeluftkühlers verbindende heißseitige Ladeluftleitung umfasst.

Da der Abgasturbolader einerseits und der Ladelufteinlass des Ladeluftkühlers andererseits sich im Betrieb des Verbrennungsmotors relativ zueinander bewegen, muss die heißseitige Ladeluftleitung eine ausreichende Flexibilität aufweisen, um die Relativbewegungen ihres turboladerseitigen Endes und ihres ladeluftkühlerseitigen Endes ausgleichen zu können.

Bekannte Baugruppen der vorstehend genannten Art sind daher aus Metallrohren und flexiblen Schläuchen aus gummielastischem Material gebildet. Solche zusammengesetzten Ladeluftleitungen sind jedoch aufwendig in der Herstellung und in der Montage.

Kunststoffrohre, wie sie für die kaltseitige Ladeluftleitung zwischen einem Ladeluftauslass des Ladeluftkühlers und einem Ladelufteinlass des Verbrennungsmotors verwendet werden, halten den hohen Ladelufttemperaturen und Ladeluftdrücken in der heißseitigen Ladeluftleitung nicht stand.

Eine Baugruppe gemäß dem Oberbegriff von Anspruch 1 wird in der JP 2005 214375 A offenbart.

Der vorliegenden Erfindung liegt die Aufgabe zugrunde, eine Baugruppe der eingangs genannten Art zu schaffen, welche einen Bewegungsausgleich zwischen dem Abgasturbolader und dem Ladeluftkühler ermöglicht und einfach herzustellen und zu montieren ist.

Diese Aufgabe wird durch eine Baugruppe nach Anspruch 1 gelöst.

Dabei ist unter einem "modifizierten Polytetrafluorethylen" ein Polytetrafluorethylen-ähnlicher Stoff zu versehen, bei welchem die Molekülstruktur des Polytetrafluorethylen (PTFE) dadurch chemisch modifiziert worden ist, dass neben Tetrafluorethylen noch ein weiteres, ebenfalls perfluoriertes Monomer in die Molekülkette eingebaut wurde, so dass die Fluoratome des PTFE teilweise durch Substituenten ersetzt sind.

Die chemische Zusammensetzung und Herstellung von "modifiziertem PTFE" sind beispielsweise in der EP 0 041 687 A1, der EP 0 931 798 A1 oder der US-Patentschrift Nr. 6,013,700 beschrieben.

Die als einteiliges Kunststoffrohr aus einem PTFE oder modifiziertes PTFE enthaltenden Material gebildete Ladeluftleitung ist einfach herstellbar, handhabbar und montierbar und weist eine hohe Temperaturbeständigkeit sowie eine hohe dynamische mechanische Beständigkeit auf, so dass eine solche Ladeluftleitung überraschenderweise auch den hohen Einsatztemperaturen und Einsatzdrücken in einer heißseitigen Ladeluftleitung gewachsen ist.

Das Kunststoffrohr ist an seinen Enden plastisch und/oder elastisch verformbar, um das Kunststoffrohr direkt und fluiddicht mit den angrenzenden Aggregaten, d.h. mit dem Abgasturbolader und dem Ladeluftkühler, zu verbinden.

Der PTFE oder modifiziertes PTFE enthaltende Werkstoff des einteiligen Kunststoffrohrs ist für niedrige Temperaturen bis zu -50°C und für hohe Temperaturen bis zu ungefähr 300°C geeignet und dynamisch hoch belastbar. Die daraus gebildete Ladeluftleitung weist eine sehr gute Biegewechselfestigkeit und eine hohe akustische Eigendämpfung sowie eine universelle chemische Beständigkeit gegen Blow-By-Gase und motortypische Medien, wie beispielsweise Öle, Fette, Bremsflüssigkeit und Streusalz, auf.

Da die erfindungsgemäße Ladeluftleitung aus einem einteiligen Kunststoffrohr gebildet ist, ist sie einfach, prozesssicher und kostengünstig herstellbar und bei der Montage in einfacher Weise handhabbar.

Um die gewünschte Formflexibilität der flexiblen Zone des Kunststoffrohrs bereitzustellen, kann insbesondere vorgesehen sein, dass die flexible Zone einen gewellten Bereich, vorzugsweise einen Faltenbalg, umfasst.

Vorzugsweise ist die flexible Zone näher an dem ladeluftkühlerseitigen Ende des Kunststoffrohrs angeordnet als an dem turboladerseitigen Ende des Kunststoffrohrs, wo die thermische Belastung der Ladeluftleitung am höchsten ist.

Das Kunststoffrohr der erfindungsgemäßen Baugruppe kann über seine ganze Länge hinweg flexibel ausgebildet sein.

Alternativ hierzu kann aber auch vorgesehen sein, dass das Kunststoffrohr neben der mindestens einen flexiblen Zone auch mindestens eine steife Zone aufweist.

Die steife, formstabile Zone des Kunststoffrohrs kann mindestens einen gekrümmten Abschnitt aufweisen.

Das erfindungsgemäß als Ladeluftleitung verwendete Kunststoffrohr ist blasgeformt.

Je höher die Umformtemperatur gewählt wird, desto geringer ist bei dem ausgeformten Kunststoffrohr der Memory-Effekt, d.h. die Rückformneigung des ausgeformten Kunststoffrohrs bei Erwärmung.

Besonders günstig ist es daher, wenn das Kunststoffrohr bei einer Temperatur oberhalb der Kristallitschmelztemperatur des Ausgangsmaterials geformt ist.

Das Kunststoffrohr kann beispielsweise aus reinem Polytetrafluorethylen und/oder modifiziertem Polytetrafluorethylen gebildet sein.

Alternativ hierzu kann auch vorgesehen sein, dass das Kunststoffrohr aus einem Polytetrafluorethylen-Compound und/oder aus einem modifizierten Polytetrafluorethylen-Compound gebildet ist, d.h. aus einem Gemisch von Polytetrafluorethylen bzw. modifiziertem Polytetrafluorethylen und mindestens einem organischen oder anorganischen Füllstoff.

Um das Kunststoffrohr schwarz einzufärben, kann insbesondere vorgesehen sein, dass das Polytetrafluorethylen-Compound oder das modifizierte Polytetrafluorethylen-Compound ein Schwarzpigment, vorzugsweise Ruß, enthält.

Grundsätzlich könnte das Kunststoffrohr zur Bildung der heißseitigen Ladeluftleitung mit einem anderen ladeluftführenden Element, beispielsweise mit einem Metallrohr, kombiniert werden.

Um die Anzahl der für die erfindungsgemäße Baugruppe benötigten Bauelemente und damit den Herstellungs- und Montageaufwand möglichst niedrig zu halten, ist es jedoch von Vorteil, wenn die heißseitige Ladeluftleitung außer dem einteiligen Kunststoffrohr kein weiteres ladeluftführendes Element umfasst.

Um die Druckfestigkeit und die mechanische Stabilität der Ladeluftleitung zu erhöhen, ist vorgesehen, dass mindestens ein Verstärkungsring an dem Kunststoffrohr angeordnet ist.

Vorzugsweise ist vorgesehen, dass mindestens ein Verstärkungsring an der Außenseite des Kunststoffrohrs angeordnet ist, um eine unerwünschte Aufweitung des Kunststoffrohrs unter dem Ladeluftdruck, mit welchem der Innenraum des Kunststoffrohrs beaufschlagt wird, zu verhindern.

Besonders effizient ist es, wenn mindestens ein Verstärkungsring in der flexiblen Zone des Kunststoffrohrs angeordnet ist.

Um das Kunststoffrohr mit dem daran angeordneten Verstärkungsring in einfacher Weise als Einheit handhaben zu können, ist es günstig, wenn mindestens ein Verstärkungsring formschlüssig an dem Kunststoffrohr gehalten ist.

Mindestens ein Verstärkungsring kann einteilig ausgebildet sein.

Ein solcher einteiliger Verstärkungsring wird vorzugsweise bereits bei der Ausformung des Kunststoffrohrs mit dem Kunststoffrohr verbunden.

Alternativ oder ergänzend hierzu kann auch vorgesehen sein, dass mindestens ein Verstärkungsring mehrteilig ausgebildet ist.

Mehrteilige Verstärkungsringe können beispielsweise mit Schnappverschlüssen versehen sein und nachträglich auf das fertig ausgeformte Kunststoffrohr aufgebracht werden.

Mindestens ein Verstärkungsring kann ein metallisches Material, insbesondere ein Stahlmaterial, umfassen und vorzugsweise ganz aus dem metallischen Material gebildet sein.

Alternativ hierzu kann auch vorgesehen sein, dass mindestens ein Verstärkungsring ein Kunststoffmaterial umfasst, vorzugsweise ganz aus dem Kunststoffmaterial gebildet ist.

Alternativ oder ergänzend hierzu kann auch vorgesehen sein, dass mindestens ein Verstärkungsring aus einem Fasermaterial gebildet ist.

Dieses Fasermaterial kann insbesondere organische, mineralische und/oder metallische Fasern umfassen.

Vorzugsweise ist der mindestens eine Verstärkungsring aus dem Fasermaterial geflochten, gewebt und/oder gesponnen.

Um die Ladeluftleitung in einer gewünschten Lage fixieren zu können, ist es von Vorteil, wenn mindestens ein Verstärkungsring mit einem Befestigungselement zum Befestigen des Kunststoffrohrs an einer außerhalb der Ladeluftleitung liegenden Befestigungsstelle versehen ist.

Eine solche Befestigungsstelle kann beispielsweise an einem Teil der Karosserie oder an einem Teil des Verbrennungsmotors eines Fahrzeugs, in welchem die erfindungsgemäße Baugruppe angeordnet ist, angeordnet sein.

Das Befestigungselement kann insbesondere ein Schnappelement, ein Klemmelement, ein Rastelement, einen Gewindestift und/oder eine Mutter umfassen.

Um mindestens einen Verstärkungsring an einem Abschnitt des Kunststoffrohrs mit einem nicht rotationssymmetrischen Querschnitt, insbesondere mit einem ovalen Querschnitt, anordnen zu können, kann vorgesehen sein, dass mindestens ein Verstärkungsring einen nicht rotationssymmetrischen, insbesondere einen ovalen, Grundkörper aufweist.

Das Kunststoffrohr der erfindungsgemäßen Baugruppe ist vorzugsweise bei einer Betriebstemperatur von mindestens 200°C, insbesondere von mindestens 250°C, thermisch stabil.

Ferner ist es von Vorteil, wenn das Kunststoffrohr der erfindungsgemäßen Baugruppe bei einem Betriebsinnendruck von mindestens 2 bar, vorzugsweise von mindestens 2,5 bar, mechanisch stabil ist.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: ein schematisches Blockschaltbild eines Verbrennungsmotors mit Abgasturbolader und Ladeluftkühler;
- Fig. 2: einen schematischen Längsschnitt durch ein Kunststoffrohr, das eine den Abgasturbolader mit einem Ladelufteinlass des Ladeluftkühlers verbindende heißseitige Ladeluftleitung bildet;
- Fig. 3: einen schematischen Querschnitt durch das Kunststoffrohr aus Fig. 2, längs der Linie 3-3 in Fig. 2;
- Fig. 4: einen schematischen Längsschnitt durch eine zweiteilige Blasform und einen in die Blasform eingelegten Kunststoffschlauch vor einem Blasformvorgang, bei geöffneter Blasform;
- Fig. 5: einen schematischen Längsschnitt durch die Blasform aus Fig. 4 mit dem eingelegten Kunststoffschlauch vor einem Blasformvorgang, bei geschlossener Blasform;
- Fig. 6: einen schematischen Längsschnitt durch die Blasform aus den Fig. 4 und 5 mit dem ausgeformten Kunststoffrohr nach dem Abschluss des Blasformvorgangs;
- Fig. 7: einen schematischen Längsschnitt durch eine zweite Ausführungsform eines die heißseitige Ladeluftleitung bildenden Kunststoffrohrs, das mit mehreren Verstärkungsringen versehen ist;
- Fig. 8: einen schematischen Querschnitt durch das Kunststoffrohr aus Fig. 7, längs der Linie 8-8 in Fig. 7;
- Fig. 9: einen schematischen Längsschnitt durch eine zweiteilige Blasform mit einem eingelegten Kunststoffschlauch und eingelegten Verstärkungsringen vor einem Blasformvorgang, bei geöffneter Blasform;
- Fig. 10: einen schematischen Längsschnitt durch die Blasform aus Fig. 9 mit dem eingelegten Kunststoffschlauch und den eingelegten Verstärkungsringen vor dem Blasformvorgang, bei geschlossener Blasform;
- Fig. 11: einen schematischen Längsschnitt durch die Blasform aus den Fig. 9 und 10 mit dem ausgeformten Kunststoffrohr und den daran angeordneten Verstärkungsringen nach Abschluss des Blasformvorgangs;
- Fig. 12: eine schematische perspektivische Darstellung eines Verstärkungsrings mit einem rotationssymmetrischen Grundkörper, der mit einem Befestigungselement versehen ist; und
- Fig. 13: eine schematische perspektivische Darstellung eines Verstärkungsrings mit einem ovalen Grundkörper, der mit einem Befestigungselement versehen ist.

Gleiche oder funktional äquivalente Elemente sind in allen Figuren mit denselben Bezugszeichen bezeichnet.

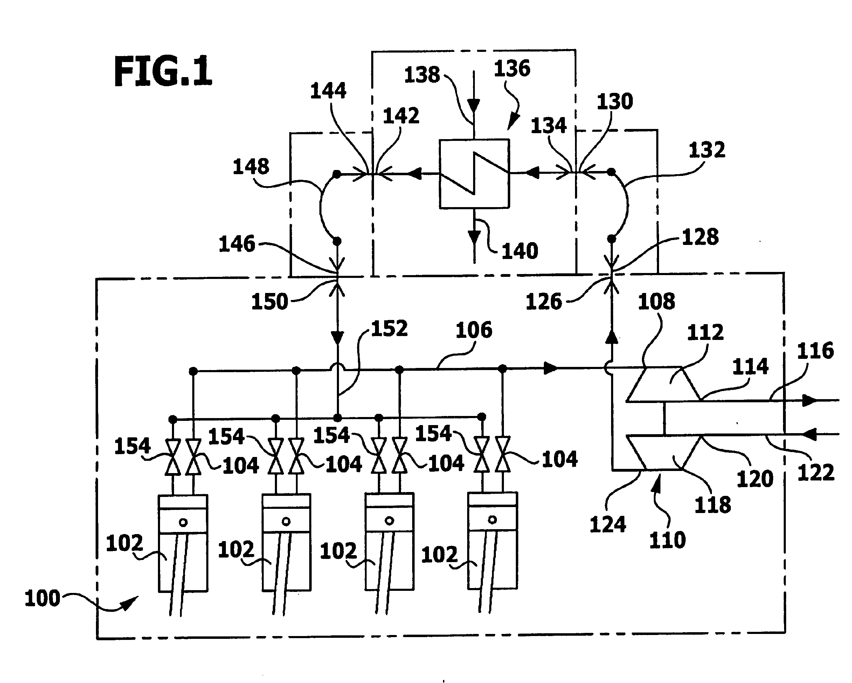

Ein in Fig. 1 als Ganzes mit 100 bezeichneter Verbrennungsmotor umfasst mehrere, beispielsweise vier, Zylinder 102, von denen jeder über ein Auslassventil 104 an einen Abgaskanal 106 angeschlossen ist, welcher zu einem Abgaseintritt 108 eines Abgasturboladers 110 führt. Das vom Verbrennungsmotor 100 kommende Abgas treibt in dem Abgasturbolader 110 ein abgasseitiges Schubrad 112 an und verlässt dann den Abgasturbolader 110 über einen Abgasauslass 114, an den eine Abgasleitung 116 angeschlossen ist.

Das abgasseitige Schubrad 112 treibt ein ladeluftseitiges Schubrad 118 an, welches über einen Lufteinlass 120 aus einer Ansaugluftleitung 122 in die Ladeluftseite des Abgasturboladers 110 eintretende Luft verdichtet und beschleunigt.

Durch einen Luftauslasskanal 124 gelangt die verdichtete Ladeluft zu einem mit einem Schnellkupplungsanschluss versehenen Ladeluftauslass 126 des Abgasturboladers 110.

Der Ladeluftauslass 126 ist über eine an beiden Enden mit jeweils einem Schnellkupplungsanschluss 128, 130 versehene heißseitige Ladeluftleitung 132 mit einem mit einem Schnellkupplungsanschluss versehenen Ladelufteinlass 134 eines Ladeluftkühlers 136 verbunden.

In der heißseitigen Ladeluftleitung 132 weist die Ladeluft einen Druck im Bereich von beispielsweise ungefähr 2,5 bar bis ungefähr 3 bar und eine Temperatur im Bereich von ungefähr 200°C bis ungefähr 250°C auf.

Der Ladeluftkühler 136 ist ein Wärmetauscher, in welchem die Ladeluft mittels von einem Kühler des Kraftfahrzeugs her kommender Kühlluft gekühlt wird.

Diese Kühlluft tritt durch einen Kühllufteinlass 138 in die Kühlluftseite des Ladeluftkühlers 136 ein, nimmt Wärme aus der Ladeluft auf und tritt durch einen Kühlluftauslass 140 wieder aus dem Ladeluftkühler 136 aus.

Die auf eine Temperatur von beispielsweise ungefähr 145°C gekühlte und einen Druck von beispielsweise ungefähr 1,5 bar aufweisende Ladeluft verlässt die Ladeluftseite des Ladeluftkühlers 136 durch einem mit einem Schnellkupplungsanschluss versehenen Ladeluftauslass 142, an den eine an ihren beiden Enden mit jeweils einem Schnellkupplungsanschluss 144, 146 versehene kaltseitige Ladeluftleitung 148 angeschlossen ist, welche den Ladeluftkühler 136 mit einem Ladelufteinlass 150 des Verbrennungsmotors 100 verbindet, der ebenfalls mit einem Schnellkupplungsanschluss versehen ist.

Von dem Ladelufteinlass 150 des Verbrennungsmotors 100 führt ein sich verzweigender Luftzuführkanal 152 zu Einlassventilen 154 der Zylinder 102 des Verbrennungsmotors 100.

Der Ladeluftkühler 136 ist mit der Karosserie des Kraftfahrzeugs verbunden, während der Verbrennungsmotor 100 und der daran angeordnete Abgasturbolader 110 von der Karosserie schwingungsentkoppelt gelagert sind.

Der Ladeluftauslass 126 des Abgasturboladers 110 einerseits und der Ladelufteinlass 134 des Ladeluftkühlers 136 andererseits bewegen sich daher im Betrieb des Verbrennungsmotors 100 relativ zueinander, weshalb die heißseitige Ladeluftleitung 132 eine ausreichende Flexibilität aufweisen muss, um die Relativbewegungen ihres turboladerseitigen Endes und ihres ladeluftkühlerseitigen Endes ausgleichen zu können.

Der Abgasturbolader 110, der Ladeluftkühler 136 und die den Abgasturbolader 110 mit dem Ladelufteinlass 134 des Ladeluftkühlers 136 verbindende heißseitige Ladeluftleitung 132 bilden somit eine schwingungsfähige Baugruppe 156.

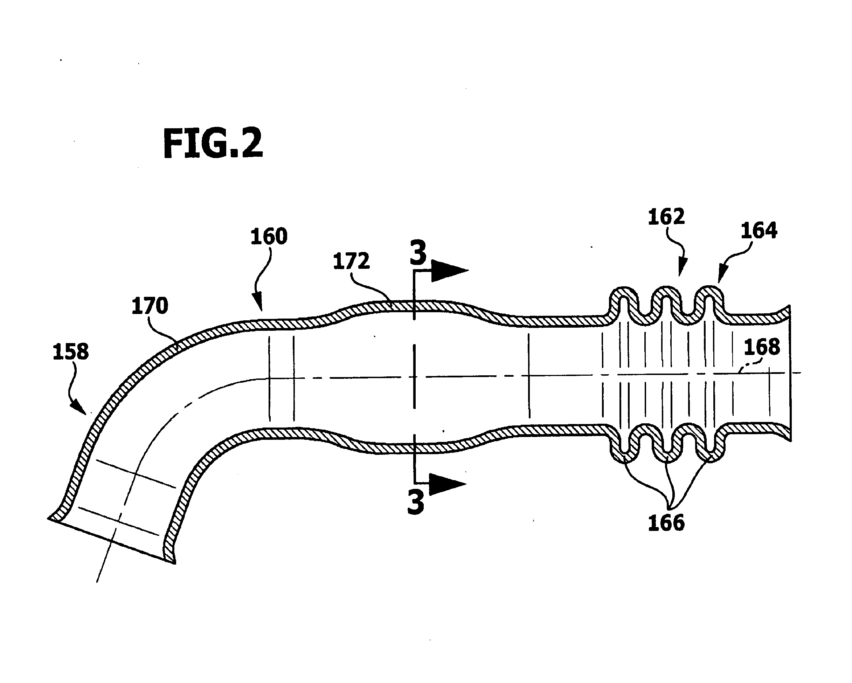

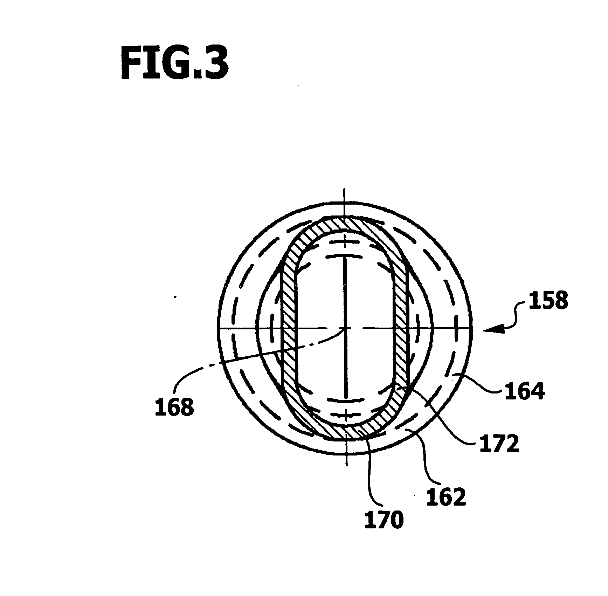

Die heißseitige Ladeluftleitung 132 ist durch ein einstückiges Kunststoffrohr 158 gebildet, welches in den Fig. 2 und 3 im einzelnen dargestellt ist.

Das Kunststoffrohr 158 weist eine dem Abgasturbolader 110 zugewandte steife Zone 160 und eine dem Ladeluftkühler 136 zugewandte flexible Zone 162 auf.

Die flexible Zone 162 umfasst einen Faltenbalg 164 mit mehreren, beispielsweise drei, ringförmigen Falten 166, welche sowohl eine Dehnung oder Stauchung der flexiblen Zone 162 längs der Rohrlängsachse 168 als auch eine Verkippung der Rohrlängsachse 168 im Bereich der flexiblen Zone 162 ermöglichen.

Die steife Zone 160 des Kunststoffrohrs 158 ist hingegen im wesentlichen formstabil.

Die steife Zone 160 kann einen gekrümmten Abschnitt 170 aufweisen.

Ferner kann die steife Zone 160 einen beispielsweise zwischen dem gekrümmten Abschnitt 170 und der flexiblen Zone 162 angeordneten Abschnitt 172 mit einem ovalen Querschnitt (siehe Fig. 3) aufweisen.

Außerhalb des Abschnitts 172 mit ovalem Querschnitt und des gekrümmten Abschnitts 170 ist das Kunststoffrohr 158 im wesentlichen rotationssymmetrisch bezüglich der Rohrlängsachse 168 ausgebildet.

Das Kunststoffrohr 158 ist einstückig aus einem PTFE oder modifiziertes PTFE enthaltenden Material gebildet, das bei den in der heißseitigen Ladeluftleitung 132 herrschenden Betriebsdrücken von beispielsweise ungefähr 2,5 bar bis ungefähr 3 bar mechanisch stabil und bei den in der heißseitigen Ladeluftleitung 132 herrschenden Betriebstemperaturen von ungefähr 200°C bis ungefähr 250°C thermisch stabil ist.

Vorzugsweise ist das Kunststoffrohr 158 aus einem PTFE-Compound oder aus einem modifizierten PTFE-Compound gebildet.

Dieses PTFE-Compound bzw. modifizierte PTFE-Compound kann ein Schwarzpigment, vorzugsweiße Ruß, in einer Menge von bis zu 10 Gewichtsprozent enthalten, um das Kunststoffrohr 158 schwarz einzufärben.

Das Kunststoffrohr 158 ist an seinen beiden Enden mit jeweils einem (nicht dargestellten) Schnellkupplungsanschluss versehen.

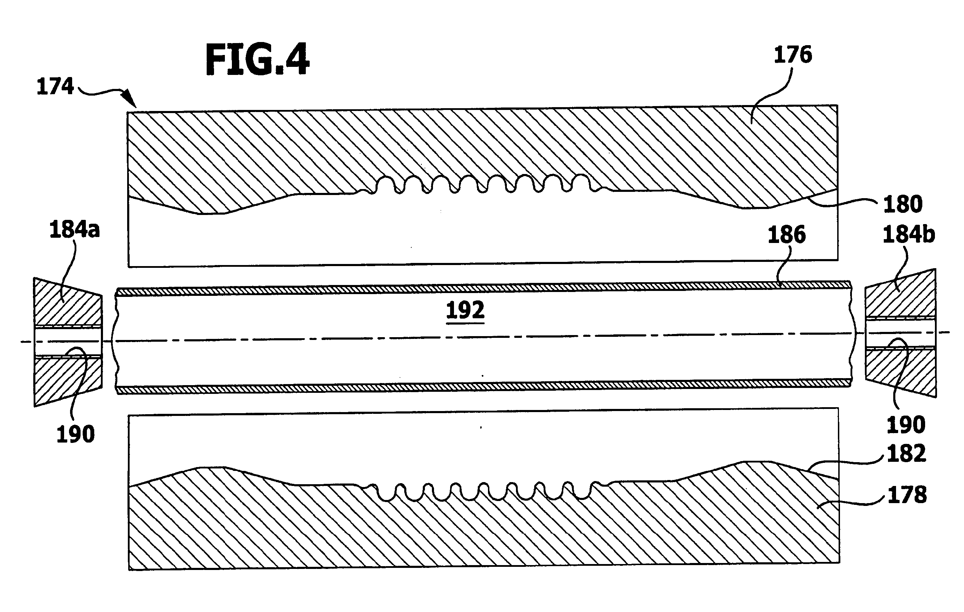

Das Kunststoffrohr 158 wird durch einen Blasformvorgang hergestellt, der im folgenden unter Bezugnahme auf die Fig. 4 bis 6 erläutert wird.

Für den Blasformvorgang wird eine mehrteilige Blasform 174 verwendet, die ein Oberteil 176 und ein Unterteil 178, deren einander zugewandte Innenseiten 180, 182 entsprechend der gewünschten Außenkontur des Kunststoffrohrs 158 ausgebildet sind, und zwei stirnseitige Anschlussstücke 184a, 184b umfasst.

Bei geöffneter Blasform 174 (siehe Fig. 4) wird ein Schlauch 186 aus dem PTFE oder modifiziertes PTFE enthaltenden Ausgangsmaterial zwischen das Oberteil 176 und das Unterteil 178 der Blasform 174 eingelegt.

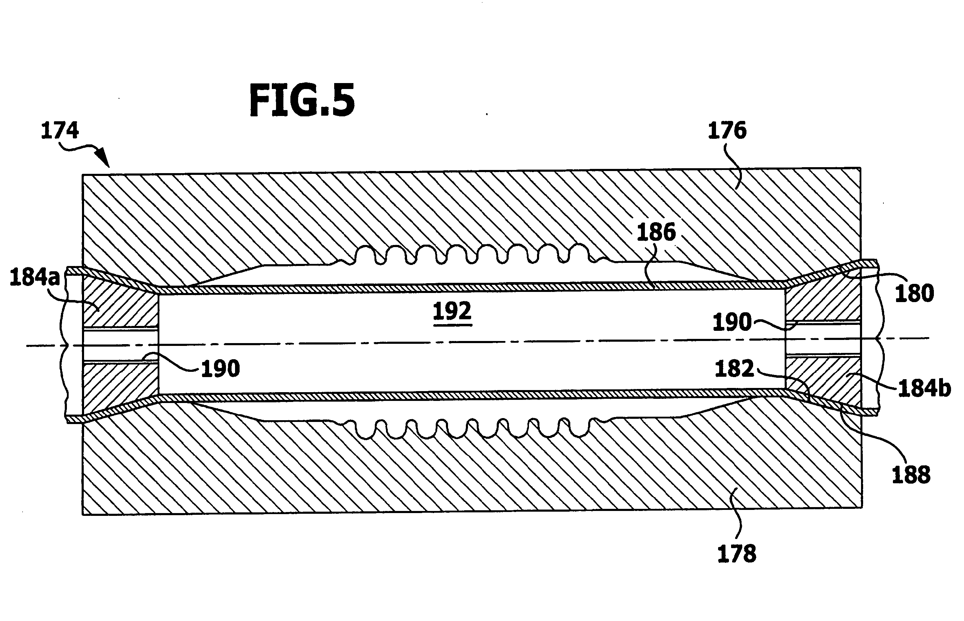

Anschließend wird die Blasform 174 geschlossen (siehe Fig. 5), wobei die beiden Enden des Schlauches 186 über jeweils ein Anschlussstück 184a, 184b gezogen und zwischen die Außenseite 188 jeweils eines Anschlussstücks 184a, 184b einerseits und die Innenseite 180 bzw. 182 des Oberteils 176 bzw. des Unterteils 178 der Blasform 174 andererseits eingespannt werden.

Anschließend wird die Blasform 174 mittels einer (nicht dargestellten) Heizvorrichtung auf eine Blastemperatur im Bereich von ungefähr 250°C bis ungefähr 400°C erwärmt.

Je höher die Blastemperatur gewählt wird, desto geringer ist bei dem ausgeformten Kunststoffrohr 158 der Memory-Effekt, d.h. die Rückformneigung des ausgeformten Kunststoffrohrs 158 bei Erwärmung.

Besonders günstig ist es, wenn die Blasumformung bei einer Temperatur oberhalb der Kristallitschmelztemperatur des Ausgangsmaterials des Schlauches 186 durchgeführt wird.

Im Falle von reinem PTFE als Ausgangsmaterial liegt die Kristallitschmelztemperatur bei ungefähr 327°C.

Nach Erreichen der gewünschten Blastemperatur wird Luft oder ein inertes Gas unter einem Blasdruck von beispielsweise ungefähr 6 bar bis ungefähr 50 bar durch Zutrittskanäle 190 in den Anschlussstücken 184a, 184b dem Innenraum 192 des Schlauches 186 zugeführt.

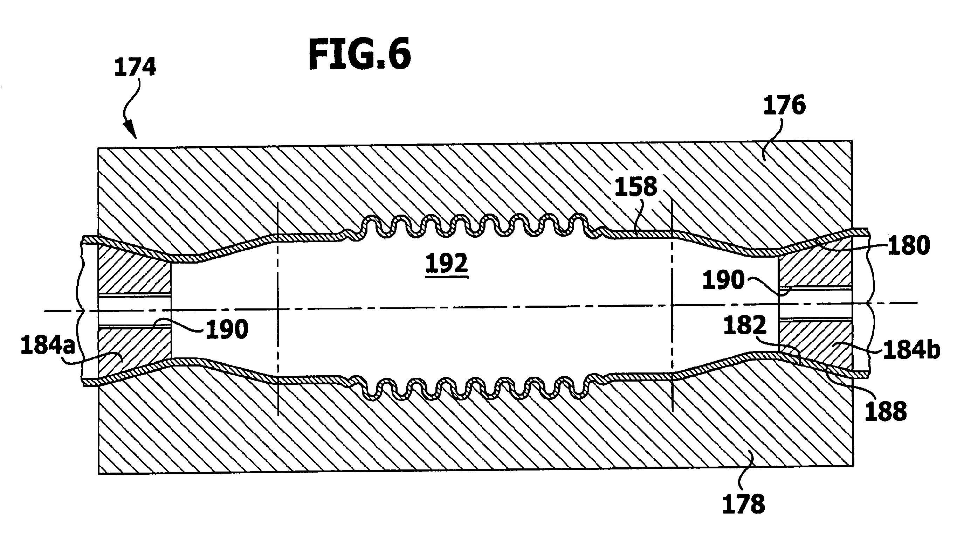

Durch diese Beaufschlagung seines Innenraums 192 mit dem erhöhten Blasdruck wird die Wandung des Schlauches 186 aufgeblasen und legt sich an die Innenseiten 180, 182 des Oberteils 176 bzw. des Unterteils 178 der Blasform 174 an (siehe Fig. 6), so dass die gewünschte Kontur des Kunststoffrohrs 158 ausgebildet wird.

Der erhöhte Blasdruck im Innenraum 192 des Schlauchs 186 bzw. des ausgeformten Kunststoffrohrs 158 wird während einer Blasdauer im Bereich von einigen Sekunden bis einigen Minuten aufrechterhalten.

Anschließend wird die Blasform 174 durch Abschalten der Heizvorrichtung und gegebenenfalls durch Zusatzkühlung bis auf eine Entformungstemperatur im Bereich von ungefähr 100°C bis ungefähr 250°C abgekühlt.

Nach Erreichen der gewünschten Entformungstemperatur wird die mehrteilige Blasform 174 geöffnet und das ausgeformte Kunststoffrohr 158 entnommen.

Nach Ausbildung der Schnellkupplungsanschlüsse an den Enden des Kunststoffrohrs 158 kann das Kunststoffrohr 158 als heißseitige Ladeluftleitung 132 in der Baugruppe 156 verwendet werden.

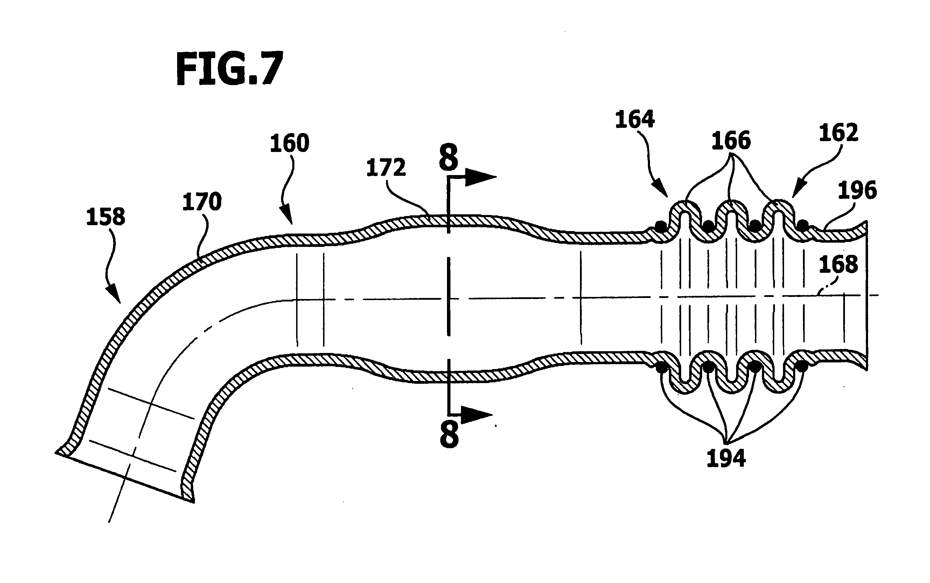

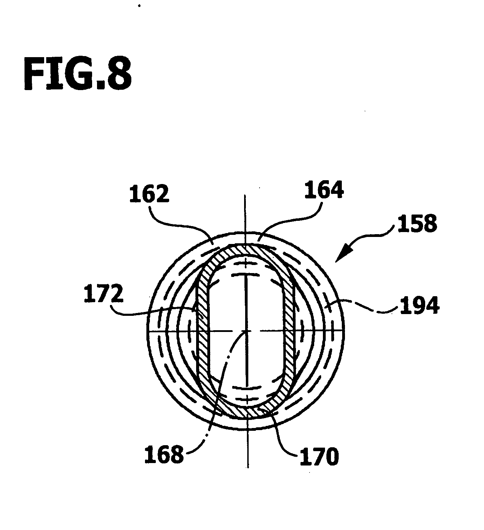

Eine in den Fig. 7 und 8 dargestellte zweite Ausführungsform eines als heißseitige Ladeluftleitung 132 dienenden einstückigen Kunststoffrohrs 158 unterscheidet sich von der in den Fig. 2 und 3 dargestellten ersten Ausführungsform dadurch, dass das Kunststoffrohr 158 im Bereich der flexiblen Zone 162 zur Erhöhung der Druckfestigkeit und der mechanischen Stabilität mit mehreren, beispielsweise vier, Verstärkungsringen 194 versehen ist, die von außen, insbesondere im Bereich zwischen jeweils zwei Falten 166, an der Außenseite 196 des Kunststoffrohrs 158 anliegen.

Diese Verstärkungsringe 194 können aus einem metallischen Material, beispielsweise aus einem Stahlmaterial, oder aus einem thermisch und mechanisch hinreichend beständigen Kunststoffmaterial gebildet sein.

Alternativ oder ergänzend hierzu kann auch vorgesehen sein, dass mindestens ein Verstärkungsring 194 als ein textiler Verstärkungsring ausgebildet ist, der aus einem Fasermaterial gebildet ist.

Dieses Fasermaterial kann organische, mineralische und/oder metallische Fasern umfassen.

Der mindestens eine Verstärkungsring 194 kann aus einem solchen Fasermaterial geflochten, gewebt und/oder gesponnen sein.

Die Verstärkungsringe 194 können einteilig oder mehrteilig ausgebildet sein.

Mehrteilige Verstärkungsringe 194 können beispielsweise mit Schnappverschlüssen versehen sein und nachträglich auf das fertig ausgeformte Kunststoffrohr 158 aufgebracht werden.

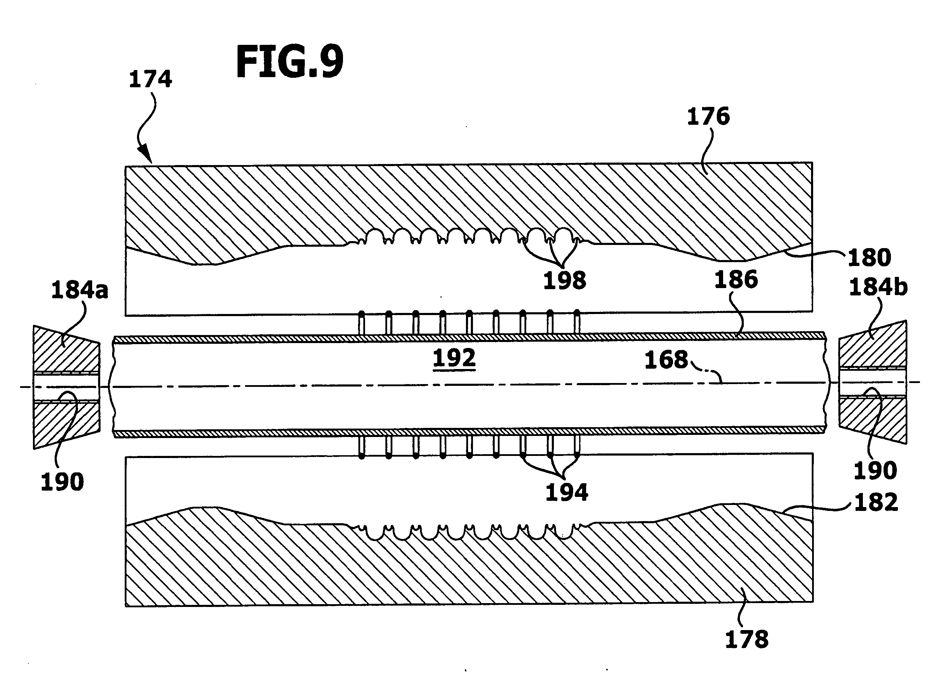

Einteilige Verstärkungsringe 194 können bereits bei der Ausformung des Kunststoffrohrs 158 mit demselben verbunden werden, wie dies in den Fig. 9 bis 11 dargestellt ist.

Wie aus Fig. 9 zu ersehen ist, werden hierzu bei geöffneter mehrteiliger Blasform 174 die Verstärkungsringe 194 zusammen mit dem Schlauch 186 aus dem Ausgangsmaterial an der gewünschten axialen Position zwischen das Oberteil 176 und das Unterteil 178 der Blasform 174 eingelegt, wobei sich der Schlauch 186 aus dem Ausgangsmaterial durch die Verstärkungsringe 194 hindurch erstreckt.

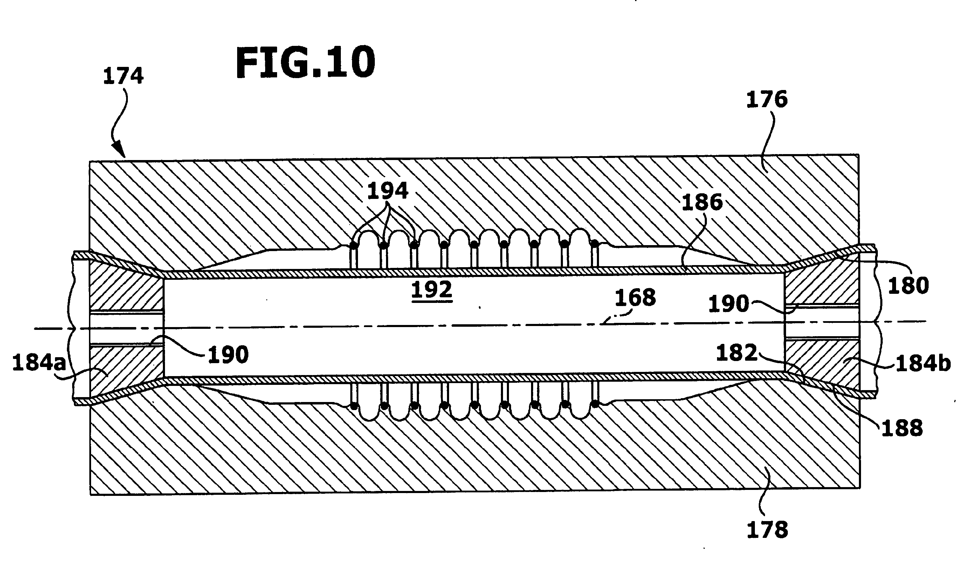

Anschließend wird die Blasform 174 geschlossen (siehe Fig. 10), wobei die Verstärkungsringe 194 in hierfür an den Innenseiten 180, 182 des Oberteils 176 bzw. des Unterteils 178 der Blasform 174 vorgesehen Ringnuten 198 aufgenommen werden, so dass die Verstärkungsringe 194 während des Blasformvorgangs ihre gewünschte Ausrichtung relativ zu der Rohrlängsachse 168 beibehalten und nicht verkippen.

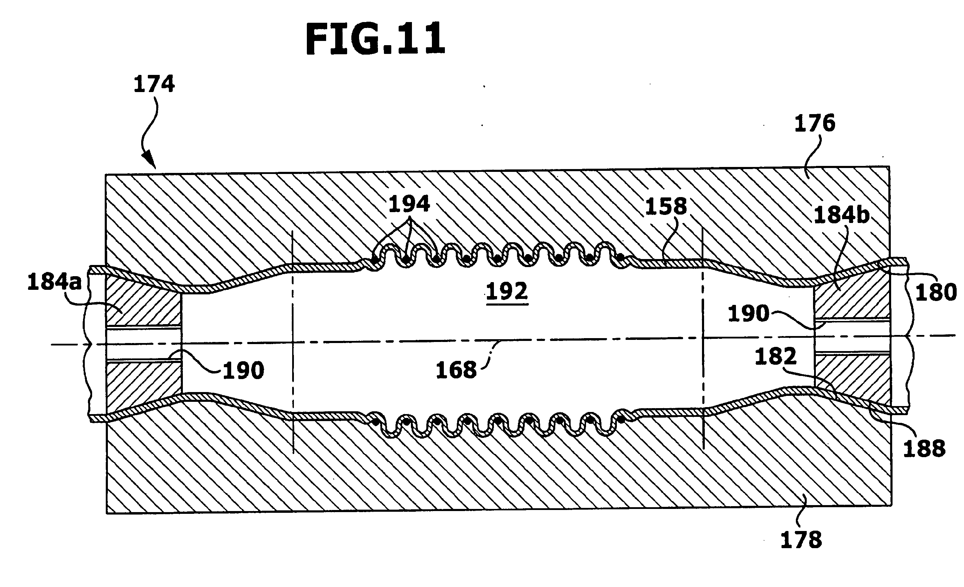

Nach Schließen der Blasform 174 und Aufheizen derselben auf die Blastemperatur wird der Blasformvorgang, wie bei der ersten Ausführungsform, durch Beaufschlagen des Innenraums 192 des Schlauches 186 mit unter dem Blasdruck stehender Luft oder inertem Gas durchgeführt, wodurch das Kunststoffrohr 158 zu der gewünschten Kontur umgeformt wird (siehe Fig. 11).

Die Verstärkungsringe 194 sind nun formschlüssig mit dem Kunststoffrohr 158 verbunden, so dass das Kunststoffrohr 158 mit den Verstärkungsringen 194 als eine Einheit gehandhabt und montiert werden kann.

Nach Abkühlen der Blasform 174 auf die Entformungstemperatur wird die Blasform 174 geöffnet und das Kunststoffrohr 158 mit den daran angeordneten Verstärkungsringen 194 entnommen.

Im übrigen stimmt die in den Fig. 7 bis 11 dargestellte zweite Ausführungsform eines als heißseitige Ladeluftleitung 132 dienenden Kunststoffrohrs 158 hinsichtlich Aufbau, Funktion und Herstellungsweise mit der in den Fig. 1 bis 6 dargestellten ersten Ausführungsform überein, auf deren vorstehende Beschreibung insoweit Bezug genommen wird.

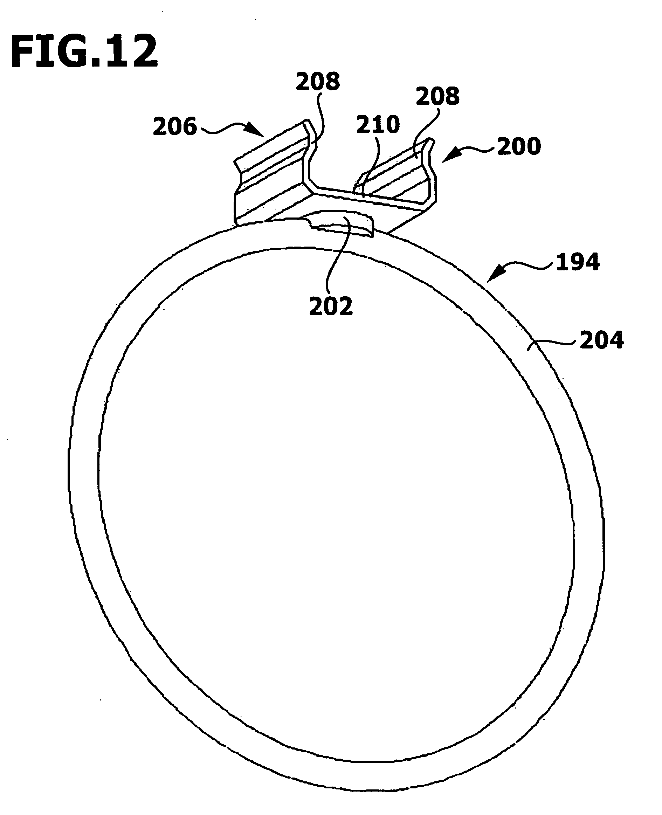

Eine dritte Ausführungsform eines als heißseitige Ladeluftleitung dienenden einstückigen Kunststoffrohrs, von der ein Verstärkungsring 194 in Fig. 12 dargestellt ist, unterscheidet sich von der in den Fig. 7 und 8 dargestellten zweiten Ausführungsform dadurch, dass mindestens einer der Verstärkungsringe 194 mit mindestens einem Befestigungselement 200 versehen ist, welches zum Befestigen des Kunststoffrohrs 158 an einer außerhalb der Ladeluftleitung 132 liegenden Befestigungsstelle, beispielsweise an einem Karosserieteil oder an einem Teil des Verbrennungsmotors 100, dient.

Das Befestigungselement 200 umfasst einen, beispielsweise im wesentlichen zylindrischen, Sockel 202, der eine Aufnahmenut zur teilweisen Aufnahme eines ringförmigen Grundkörpers 204 des Verstärkungsrings 194 aufweist.

Der Sockel 202 dient zum Festlegen des Befestigungselements 200 an dem Grundkörper 204.

Insbesondere kann vorgesehen sein, dass der Sockel 202 durch Verschweißen, insbesondere durch Punktschweißen, an dem Grundkörper 204 festgelegt ist.

Ferner umfasst das Befestigungselement 200 einen Schnappteil 206 mit einem im wesentlichen U-förmigen Querschnitt, welcher zwei Schnappzungen 208 und einen die beiden Schnappzungen 208 miteinander verbindenden Steg 210 umfasst.

Die elastisch federnden Schnappzungen 208 sind dafür vorgesehen, jeweils einen Vorsprung an der außerhalb der Ladeluftleitung 132 liegenden Befestigungsstelle zu hintergreifen und durch Einschnappen hinter diesen Vorsprüngen den Verstärkungsring 194 und damit das Kunststoffrohr 158, an welchem der Verstärkungsring 194 angeordnet ist, an der Befestigungsstelle lösbar festzulegen.

Alternativ zu einer Ausbildung als Schnappelement kann das Befestigungselement 200 auch als ein Klemmelement, ein Rastelement, ein Gewindestift oder eine Mutter ausgebildet sein.

Im übrigen stimmt die in Fig. 12 dargestellte dritte Ausführungsform eines als heißseitige Ladeluftleitung dienenden Kunststoffrohrs hinsichtlich Aufbau, Funktion und Herstellungsweise mit der in den Fig. 7 bis 11 dargestellten zweiten Ausführungsform überein, auf deren vorstehende Beschreibung insoweit Bezug genommen wird.

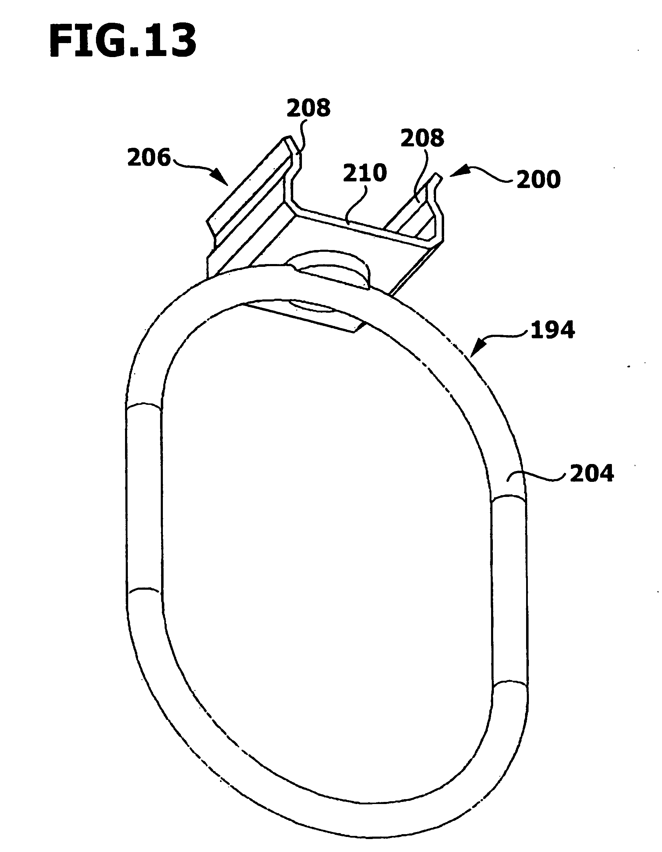

Eine vierte Ausführungsform eines als heißseitige Ladeluftleitung dienenden Kunststoffrohrs, von der ein Verstärkungsring 194 in Fig. 13 dargestellt ist, unterscheidet sich von der in Fig. 12 dargestellten dritten Ausführungsform dadurch, dass der mindestens eine mit dem Befestigungselement 200 versehene Verstärkungsring 194 einen Grundkörper 204 aufweist, der nicht - wie bei der dritten Ausführungsform - im wesentlichen rotationssymmetrisch ausgebildet ist, sondern vielmehr eine nicht rotationssymmetrische, insbesondere ovale, Gestalt aufweist.

Dadurch kann dieser Verstärkungsring 194 an einem Abschnitt des Kunststoffrohrs 158 mit einem nicht rotationssymmetrischen, insbesondere ovalen, Querschnitt angeordnet werden.

Im übrigen stimmt die in Fig. 13 dargestellte vierte Ausführungsform eines als heißseitige Ladeluftleitung dienenden Kunststoffrohrs hinsichtlich Aufbau, Funktion und Herstellungsweise mit der in Fig. 12 dargestellten dritten Ausführungsform überein, auf deren vorstehende Beschreibung insoweit Bezug genommen wird.

## Patentansprüche

1. Baugruppe, umfassend einen Abgasturbolader (110) und einen Ladeluftkühler (136) für einen Verbrennungsmotor (100) und eine den Abgasturbolader (110) mit einem Ladelufteinlass (134) des Ladeluftkühlers (136) verbindende heißseitige Ladeluftleitung (132),
**dadurch gekennzeichnet,**
**dass** die heißseitige Ladeluftleitung (132) ein einteiliges Kunststoffrohr (158) umfasst, das aus einem Polytetrafluorethylen und/oder modifiziertes Polytetrafluorethylen enthaltenden Material gebildet ist und mindestens eine flexible Zone (162) aufweist,
wobei das Kunststoffrohr (158) blasgeformt ist und mindestens ein Verstärkungsring (194) an dem Kunststoffrohr (158) angeordnet ist.

2. Baugruppe nach Anspruch 1, **dadurch gekennzeichnet, dass** die flexible Zone (162) einen Faltenbalg (164) umfasst.

3. Baugruppe nach einem der Ansprüche 1 oder 2, **dadurch gekennzeichnet, dass** die flexible Zone (162) näher an dem ladeluftkühlerseitigen Ende des Kunststoffrohrs (158) angeordnet ist als an dem turboladerseitigen Ende des Kunststoffrohrs (158).

4. Baugruppe nach einem der Ansprüche 1 bis 3, **dadurch gekennzeichnet, dass** das Kunststoffrohr (158) mindestens eine steife Zone (160) aufweist.

5. Baugruppe nach Anspruch 4, **dadurch gekennzeichnet, dass** die steife Zone (160) mindestens einen gekrümmten Abschnitt (170) aufweist.

6. Baugruppe nach einem der Ansprüche 1 bis 5, **dadurch gekennzeichnet, dass** das Kunststoffrohr (158) bei einer Temperatur oberhalb der Kristallitschmelztemperatur des Ausgangsmaterials geformt ist.

7. Baugruppe nach einem der Ansprüche 1 bis 6, **dadurch gekennzeichnet, dass** das Kunststoffrohr (158) aus einem Polytetrafluorethylen-Compound und/oder aus einem modifizierten Polytetrafluorethylen-Compound gebildet ist.

8. Baugruppe nach Anspruch 7, **dadurch gekennzeichnet, dass** das Polytetrafluorethylen-Compound und/oder das modifizierte Polytetrafluorethylen-Compound ein Schwarzpigment, vorzugsweise Ruß, enthält.

9. Baugruppe nach einem der Ansprüche 1 bis 8, **dadurch gekennzeichnet, dass** die heißseitige Ladeluftleitung (132) außer dem einteiligen Kunststoffrohr (158) kein weiteres ladeluftführendes Element umfasst.

10. Baugruppe nach einem der Ansprüche 1 bis 9, **dadurch gekennzeichnet, dass** mindestens ein Verstärkungsring (194) an der Außenseite (196) des Kunststoffrohrs (158) angeordnet ist.

11. Baugruppe nach einem der Ansprüche 1 bis 10, **dadurch gekennzeichnet, dass** mindestens ein Verstärkungsring (194) in der flexiblen Zone (162) des Kunststoffrohrs (158) angeordnet ist.

12. Baugruppe nach einem der Ansprüche 1 bis 11, **dadurch gekennzeichnet, dass** mindestens ein Verstärkungsring (194) formschlüssig an dem Kunststoffrohr (158) gehalten ist.

13. Baugruppe nach einem der Ansprüche 1 bis 12, **dadurch gekennzeichnet, dass** mindestens ein Verstärkungsring (194) einteilig ausgebildet ist.

14. Baugruppe nach einem der Ansprüche 1 bis 13, **dadurch gekennzeichnet, dass** mindestens ein Verstärkungsring (194) bei der Ausformung des Kunststoffrohrs (158) mit dem Kunststoffrohr (158) verbunden worden ist.

15. Baugruppe nach einem der Ansprüche 1 bis 14, **dadurch gekennzeichnet, dass** mindestens ein Verstärkungsring (194) ein metallisches Material, insbesondere ein Stahlmaterial, umfasst.

16. Baugruppe nach einem der Ansprüche 1 bis 15, **dadurch gekennzeichnet, dass** mindestens ein Verstärkungsring (194) ein Kunststoffmaterial umfasst.

17. Baugruppe nach einem der Ansprüche 1 bis 16, **dadurch gekennzeichnet, dass** mindestens ein Verstärkungsring (194) aus einem Fasermaterial gebildet ist.

18. Baugruppe nach Anspruch 17, **dadurch gekennzeichnet, dass** das Fasermaterial organische, mineralische und/oder metallische Fasern umfasst.

19. Baugruppe nach einem der Ansprüche 17 oder 18, **dadurch gekennzeichnet, dass** der mindestens eine Verstärkungsring (194) aus dem Fasermaterial geflochten, gewebt und/oder gesponnen ist.

20. Baugruppe nach einem der Ansprüche 1 bis 19, **dadurch gekennzeichnet, dass** mindestens ein Verstärkungsring (194) mit einem Befestigungselement (200) zum Befestigen des Kunststoffrohrs (158) an einer außerhalb der Ladeluftleitung (132) liegenden Befestigungsstelle versehen ist.

21. Baugruppe nach Anspruch 20, **dadurch gekennzeichnet, dass** das Befestigungselement (200) ein Schnappelement, ein Klemmelement, ein Rastelement, einen Gewindestift und/oder eine Mutter umfasst.

22. Baugruppe nach einem der Ansprüche 1 bis 21, **dadurch gekennzeichnet, dass** mindestens ein Verstärkungsring (194) einen nicht rotationssymmetrischen Grundkörper (204) aufweist.

23. Baugruppe nach einem der Ansprüche 1 bis 22, **dadurch gekennzeichnet, dass** das Kunststoffrohr (158) bei einer Betriebstemperatur von mindestens 200°C, vorzugsweise von mindestens 250°C, thermisch stabil ist.

24. Baugruppe nach einem der Ansprüche 1 bis 23, **dadurch gekennzeichnet, dass** das Kunststoffrohr (158) bei einem Betriebsinnendruck von mindestens 2 bar, vorzugsweise von mindestens 2,5 bar, mechanisch stabil ist.

## Claims

1. Assembly comprising an exhaust gas turbocharger (110) and an intercooler (136) for an internal combustion engine (100) and a hot-side charge-air line (132) connecting the exhaust gas turbocharger (110) to a charge-air inlet (134) of the intercooler (136), **characterised in that** the hot-side charge-air line (132) comprises a one-piece plastics material tube (158) which is formed from a material containing polytetrafluoroethylene and/or modified polytetrafluoroethylene and has at least one flexible zone (162),
wherein the plastics material tube (158) is blow moulded and at least one reinforcement ring (194) is arranged on the plastics material tube (158).

2. Assembly according to claim 1, **characterised in that** the flexible zone (162) comprises a bellows arrangement (164).

3. Assembly according to either claim 1 or claim 2, **characterised in that** the flexible zone (162) is arranged closer to the end on the intercooler side of the plastics material tube (158) than the end on the turbocharger side of the plastics material tube (158).

4. Assembly according to any one of claims 1 to 3, **characterised in that** the plastics material tube (158) has at least one rigid zone (160).

5. Assembly according to claim 4, **characterised in that** the rigid zone (160) has at least one curved portion (170).

6. Assembly according to any one of claims 1 to 5, **characterised in that** the plastics material tube (158) is moulded at a temperature above the crystallite melting temperature of the starting material.

7. Assembly according to any one of claims 1 to 6, **characterised in that** the plastics material tube (158) is formed from a polytetrafluoroethylene compound and/or a modified polytetrafluoroethylene compound.

8. Assembly according to claim 7, **characterised in that** the polytetrafluoroethylene compound and/or the modified polytetrafluoroethylene compound contains a black pigment, preferably carbon black.

9. Assembly according to any one of claims 1 to 8, **characterised in that** the hot-side charge-air line (132) does not comprise any other element conveying charge-air apart from the one-piece plastics material tube (158).

10. Assembly according to any one of claims 1 to 9, **characterised in that** at least one reinforcement ring (194) is arranged on the outside (196) of the plastics material tube (158).

11. Assembly according to any one of claims 1 to 10, **characterised in that** at least one reinforcement ring (194) is arranged in the flexible zone (162) of the plastics material tube (158).

12. Assembly according to any one of claims 1 to 11, **characterised in that** at least one reinforcement ring (194) is held in a positive manner on the plastics material tube (158).

13. Assembly according to any one of claims 1 to 12, **characterised in that** at least one reinforcement ring (194) is formed in one piece.

14. Assembly according to any one of claims 1 to 13, **characterised in that** at least one reinforcement ring (194) is joined to the plastics material tube (158) when the plastics material tube (158) is being moulded.

15. Assembly according to any one of claims 1 to 14, **characterised in that** at least one reinforcement ring (194) comprises a metallic material, in particular a steel material.

16. Assembly according to any one of claims 1 to 15, **characterised in that** at least one reinforcement ring (194) comprises a plastics material.

17. Assembly according to any one of claims 1 to 16, **characterised in that** at least one reinforcement ring (194) is formed from a fibrous material.

18. Assembly according to claim 17, **characterised in that** the fibrous material comprises organic, mineral and/or metallic fibres.

19. Assembly according to either claim 17 or 18, **characterised in that** the at least one reinforcement ring (194) is braided, woven and/or spun from the fibrous material.

20. Assembly according to any one of claims 1 to 19, **characterised in that** at least one reinforcement ring (194) is provided with an attachment element (200) for securing the plastics material tube (158) to an attachment point located outside the charge-air line (132).

21. Assembly according to claim 20, **characterised in that** the attachment element (200) comprises a snap-fit element, a clamping element, a locking element, a threaded pin and/or a nut.

22. Assembly according to any one of claims 1 to 21, **characterised in that** at least one reinforcement ring (194) has a non-rotationally symmetrical basic body (204).

23. Assembly according to any one of claims 1 to 22, **characterised in that** the plastics material tube (158) is thermally stable at an operating temperature of at least 200 °C, preferably at least 250°C.

24. Assembly according to any one of claims 1 to 23, **characterised in that** the plastics material tube (158) is mechanically stable at an internal operating pressure of at least 2 bar, preferably at least 2.5 bar.

## Revendications

1. Ensemble comprenant un turbocompresseur (110) à gaz d'échappement et un refroidisseur (136) d'air de suralimentation pour un moteur à combustion interne (100) et une conduite (132) d'air de suralimentation côté chaud reliant le turbocompresseur (110) à gaz d'échappement à une admission (134) d'air de suralimentation du refroidisseur (136) d'air de suralimentation,
**caractérisé en ce que**
la conduite d'air de suralimentation côté chaud (132) comporte un tube en matière plastique d'une seule pièce (158) constitué d'un matériau contenant du polytétrafluoréthylène et/ou du polytétrafluoréthylène modifié et comprenant au moins une zone flexible (162),
le tube en matière plastique (158) étant formé par soufflage et au moins une bague de renfort (194) étant disposée sur le tube en matière plastique (158).

2. Ensemble selon la revendication 1, **caractérisé en ce que** la zone flexible (162) comporte un soufflet (164).

3. Ensemble selon l'une quelconque des revendications 1 ou 2, **caractérisé en ce que** la zone flexible (162) est plus proche de l'extrémité côté refroidisseur d'air de suralimentation du tube en matière plastique (158) que de l'extrémité côté turbocompresseur du tube en matière plastique (158).

4. Ensemble selon l'une quelconque des revendications 1 à 3, **caractérisé en ce que** le tube en matière plastique (158) comprend au moins une zone rigide (160).

5. Ensemble selon la revendication 4, **caractérisé en ce que** la zone rigide (160) comprend au moins une partie incurvée (170).

6. Ensemble selon l'une quelconque des revendications 1 à 5, **caractérisé en ce que** le tube en matière plastique (158) est formé à une température supérieure à la température de fusion de la cristallite du matériau de départ.

7. Ensemble selon l'une quelconque des revendications 1 à 6, **caractérisé en ce que** le tube en matière plastique (158) est constitué d'un composé de polytétrafluoréthylène et/ou d'un composé de polytétrafluoréthylène modifié.

8. Ensemble selon la revendication 7, **caractérisé en ce que** le composé de polytétrafluorétylène et/ ou le composé de polytétrafluoréthylène modifié contient un pigment noir, de préférence de la suie.

9. Ensemble selon l'une quelconque des revendications 1 à 8, **caractérisé en ce que** la conduite d'air de suralimentation (132) côté chaud ne comporte à l'extérieur du tube en matière plastique d'une seule pièce (158) aucun autre élément guidant l'air de suralimentation.

10. Ensemble selon l'une quelconque des revendi-cations 1 à 9, **caractérisé en ce qu'**au moins une bague de renfort (194) est disposée sur le côté extérieur (196) du tube en matière plastique (158).

11. Ensemble selon l'une quelconque des revendi-cations 1 à 10, **caractérisé en ce qu'**au moins une bague de renfort (194) est disposée dans la zone flexible (162) du tube en matière plastique (158).

12. Ensemble selon l'une quelconque des revendi-cations 1 à 11, **caractérisé en ce qu'**au moins une bague de renfort (194) est maintenue par coopération de formes sur le tube en matière plastique (158).

13. Ensemble selon l'une quelconque des revendi-cations 1 à 12, **caractérisé en ce qu'**au moins une bague de renfort (194) est conçue en une seule pièce.

14. Ensemble selon l'une quelconque des revendi-cations 1 à 13, **caractérisé en ce qu'**au moins une bague de renfort (194) a été reliée au tube en matière plastique (158) lors du façonnage du tube en matière plastique (158).

15. Ensemble selon l'une quelconque des revendi-cations 1 à 14, **caractérisé en ce qu'**au moins une bague de renfort (194) comporte un matériau métallique, en particulier un matériau en acier.

16. Ensemble selon l'une quelconque des revendi-cations 1 à 15, **caractérisé en ce qu'**au moins une bague de renfort (194) comporte un matériau en matière plastique.

17. Ensemble selon l'une quelconque des revendi-cations 1 à 16, **caractérisé en ce qu'**au moins une bague de renfort (194) est constituée d'un matériau fibreux.

18. Ensemble selon la revendication 17, **caractérisé en ce que** le matériau fibreux comporte des fibres organiques, minérales et/ou métalliques.

19. Ensemble selon l'une quelconque des revendi-cations 17 ou 18, **caractérisé en ce que** la au moins une bague de renfort (194) est tressée, tissée et/ou filée à partir du matériau fibreux.

20. Ensemble selon l'une quelconque des revendi-cations 1 à 19, **caractérisé en ce qu'**au moins une bague de renfort (194) est pourvue d'un élément de fixation (200) destiné à fixer le tube en matière plastique (158) en un point de fixation situé à l'extérieur de la conduite d'air de suralimentation (132).

21. Ensemble selon la revendication 20, **caractérisé en ce que** l'élément de fixation (200) comporte un élément à déclic, un élément de serrage, un élément d'encliquetage, une tige filetée et/ou un écrou.

22. Ensemble selon l'une quelconque des revendi-cations 1 à 21, **caractérisé en ce qu'**au moins une bague de renfort (194) comprend un corps de base (204) non symétrique en rotation.

23. Ensemble selon l'une quelconque des revendi-cations 1 à 22, **caractérisé en ce que** le tube en matière plastique (158) est thermiquement stable à une température de fonctionnement d'au moins 200°C, de préférence d'au moins 250°C.

24. Ensemble selon l'une quelconque des revendi-cations 1 à 23, **caractérisé en ce que** le tube en matière plastique (158) est mécaniquement stable à une pression intérieure de fonctionnement d'au moins 2 bar, de préférence d'au moins 2,5 bar.
